# EUROPÄISCHE PATENTSCHRIFT

(11) **EP 1 743 854 B1**
(45) Veröffentlichungstag und Bekanntmachung des Hinweises auf die Patenterteilung: **09.09.2009**
(21) Anmeldenummer: 06014659.4
(22) Anmeldetag: 14.07.2006
(51) Int. Cl.: B65G 43/00, B61B 3/02, B61L 23/00

(54) **Hängebahn**
Overhead conveyor
Convoyeur aérien

(30) Priorität: 16.07.2005 DE 102005033396
(43) Veröffentlichungstag der Anmeldung: 17.01.2007
(73) Patentinhaber: Sickert & Hafner GmbH Automotive Systems, 63628 Bad Soden-Salmünster (DE)
(72) Erfinder: Sickert, Sigurd, 63628 Bad Soden-Salmünster (DE)
(74) Vertreter: Behrens, Helmut

(56) Entgegenhaltungen:
- DE-A1- 4 306 168

## Beschreibung

Die Erfindung betrifft eine Hängebahn zum Transportieren und Positionieren von Lasten oder Fertigungshilfsmitteln gemäß dem Oberbegriff des Patentanspruchs 1.

Es sind insbesondere in der Fertigungsindustrie und im Bergbau Einschienenhängebahnen bekannt, die zur Förderung von Montageteilen, Werkzeugen oder Stück- und Schüttgütern eingesetzt werden. Dazu sind in einer über Flur angeordneten Schiene hängend Laufwagen angebracht, die meist mit Laufrollen in einer Schiene verfahrbar sind. Die Laufwagen dienen dabei zur Aufnahme der zu transportierenden Lasten oder von Fertigungshilfsmitteln wie z. B. Werkzeugen, Einbauteilen oder Geräten zur Montage und zum Messen oder zur Energiezuführung. Derartige Hängebahnen bestehen in der Regel aus mehreren Laufwagen, die im gewissen zeitlichen oder räumlichen Abstand voneinander fahren und die mit ihnen geförderten Lasten oder Fertigungshilfsmittel zu einem bestimmten Ort transportieren und dort stillgesetzt werden, um dann wieder zum Ursprungsort zurückzukehren. Es sind aber auch kontinuierlich umlaufende Hängebahnen bekannt, die während ihres Bewegungsablaufs be- und entladen werden oder andere Aufgaben zur Fertigungsunterstützung erfüllen.

Eine derartige Hängebahn als Fördereinrichtung ist aus der DE 103 33 938 B3 bekannt, die eine Staufördereinrichtung darstellt bei der die Laufwagen durch eine endlose Rollenkette angetrieben werden. Dazu ist eine Schiene vorgesehen, in der quer nebeneinander angeordnete Laufrollenpaare eingehängt sind, zwischen denen die Rollenkette mit gleichmäßiger Geschwindigkeit hindurch geführt wird. An den Laufwagen sind zwischen den Rollenpaaren drehbare Zahnräder angeordnet, die in die Rollenkette eingreifen. Zur Mitnahme der Laufwagen sind die Zahnräder arretierbar, so dass die Laufwagen mit kontinuierlicher Geschwindigkeit entlang der Laufschiene mitgenommen werden. Diese Laufwagen werden vorzugsweise zur Aufnahme einer Fremdstromversorgung eingesetzt, das bei einer Automobilproduktion während der Endmontage die Autobatterie nachlädt oder zur Gleichstromversorgung der bereits eingebauten elektrischen Aggregate dient, bevor die Autobatterie eingesetzt ist. Dazu werden die Laufwagen während des Ladevorgangs oberhalb der Fertigungsstraße und parallel zu dieser mit gleicher Geschwindigkeit geführt. Bei Beendigung des Ladevorgangs werden dann die Batterieladekabel abgeklemmt und in den Laufwagen eingehängt. Daraufhin wird der Laufwagen über einen zurückführenden Schienenabschnitt wieder an den Anfangsort zurücktransportiert, um dann an ein nachfolgendes Auto angeklemmt zu werden. Dazu ist es allerdings notwendig, dass sowohl die Autos auf der Fertigungsstraße als auch die Laufwagen genau synchron transportiert werden, um ein Abreißen des angeklemmten Ladekabels zu verhindern. Dazu sind aufwändige Steuervorrichtungen erforderlich, die sowohl die Geschwindigkeit des Fertigungsbandes als auch der Rollenkette erfassen und den Antrieb der Rollenkette entsprechend steuern. Da bei einigen Fertigungsstraßen die einzelnen Autos als Fertigungsobjekte je nach Fertigungsfortschritt mit unterschiedlicher Bandgeschwindigkeit bewegbar sind, müssen dann die Laufwagen manuell angehalten oder nachgeführt werden. Dies erfordert bei einer Serienproduktion kostenaufwändige Arbeitszeit und erfordert von den Bandmitarbeitern zusätzliche Aufmerksamkeit.

Zur Vermeidung dieses Nachteils ist eine Hängebahn bekannt, bei der die Laufwagen mit der Fremdstromversorgung über eine mechanische Verbindung an das jeweilige Auto als Fertigungsobjekt während des Ladevorgangs gekoppelt werden. Dazu wird am Beginn eines zumindest in Förderrichtung parallel zum Fertigungsband verlaufenden Hängebahnabschnitts eine am Laufwagen angeordnete Führungsstange gegen die geöffnete Motorhaube des zu fertigenden Autos geschwenkt, wodurch der Laufwagen synchron zur jeweiligen Geschwindigkeit des Fertigungsobjekts mitgenommen wird. Am Ende dieses Ladevorgangs oder des parallelen Hängebahnabschnitts wird dann nach dem Abklemmen des Ladekabels die Führungsstange von der Motorhaube entfernt und der Laufwagen rollt über eine horizontal geneigte Gefällestrecke wieder zum Startpunkt zurück. Da derartige Schienenstrecken teilweise bis zu 100m lang sind, stehen häufig nicht immer die notwendigen Gefällestrecken zur Verfügung, so dass die Laufwagen dann unter erhöhtem Aufwand manuell zurückbefördert werden müssen.

Aus der DE 39 05 210 C2 ist eine Elektrohängebahn bekannt, die sich dadurch auszeichnet, dass jeder Laufwagen einen separaten Antrieb mittels eines Elektromotors aufweist. Dabei stützt sich ein mit dem Elektromotor verbundenes Antriebsrad reibschlüssig auf der Laufschiene ab und kann so auch über Steigungs- und Gefällstrecken entlang der Laufschiene selbständig befördert werden. Allerdings ist aus der DE 39 05 210 C2 nicht zu entnehmen, wie ein derartiger Laufwagen auf einem vorgesehenen Beförderungsabschnitt synchron mit einem auf einem Fertigungsband angeordneten Fertigungsobjekt gesteuert werden könnte.

Aus der DE 38 25 097 C2 ist zwar eine Vorrichtung zur Positionsmessung bei einem Kran oder einer Elektrohängebahn bekannt, bei der Codemarken längs der Laufschiene angebracht sind. Diese Codemarken werden während des Laufs des Krans durch eine Codelesevorrichtung abgetastet und in einer Auswerteelektronik ausgewertet und datenmäßig einer zentralen Steuerschaltung zugeführt. Die Steuerschaltung setzt entsprechend der erreichten Position die Antriebsvorrichtung still und setzt diese wieder in Gang. Mit einer derartigen Vorrichtung sind zwar sehr genau eine oder mehrere Positionen entlang einer Laufschiene ansteuerbar, aber damit können keine Positionen synchron zu einem beweglichen Fertigungsobjekt angesteuert werden.

Es ist zwar aus der DE 100 14 719 A1 eine Vorrichtung zum Verteilen von Waren bekannt, bei der insbesondere Wäschestücke auf einer Transporteinheit entlang einer Laufschiene positionsgenau zu vorgegebenen Trocknern verteilt werden. Dazu ist eine Überwachungseinrichtung an jeder Transporteinheit vorgesehen, die die Entfernung während des Laufs zu einer Referenzstelle mittels Laserstrahl optisch ermittelt. Da gleichzeitig die feste Position der Trockner und dessen Entfernung zur Referenzstelle entlang der Laufstrecke bekannt ist, kann die jeweilige Transporteinheit bei Erreichen der vorgegebenen Position des zugeordneten Trockners zielgenau stillgesetzt werden, so dass die Wäschestücke als Bearbeitungsobjekte dem jeweiligen Trockner automatisch zuführbar sind. Auch wenn bei dieser Vorrichtung nicht entlang der gesamten Laufschiene Positionsmarken notwendig sind, können durch die Überwachungseinrichtung offensichtlich nur eine oder mehrere vorbekannte feste Positionen angesteuert werden.

Aus der DE 43 06 168 ist außerdem eine Hängebahn bekannt, mit der berührungslos Abgarabsauganlagen hinter Fahrzeugen nachgeführt werden.

Der Erfindung liegt deshalb die Aufgabe zugrunde, eine Hängefördervorrichtung so zu verbessern, dass jeder Laufwagen ein zugeordnetes bewegliches Fertigungs- oder Behandlungsobjekt zumindest abschnittsweise selbsttätig ansteuert und diesem soweit notwendig synchron nachfolgt oder vorläuft.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Er ist bekannt, dass durch die berührungslose Abtastung des anzusteuernden Objekts keinerlei mechanische Verbindungen zwischen den zugeordneten Laufwagen und dem jeweiligen Fertigungsobjekt als Nachfolgeobjekt notwendig ist. Dadurch werden gleichzeitig manuelle Ankopplungsarbeiten überflüssig, deren Vornahme meist auch noch speziell überwacht werden müsste. Derartige mechanische Ankopplungen können insbesondere im Automobilbau auch leicht zu Beschädigungen an den Fertigungsobjekten führen, so dass diese mechanischen Ankoppelelemente aufwändig gefertigt oder abgepolstert sein müssen, so dass sich dieser Aufwand durch eine berührungslose Ankopplung vorteilhaft verringert.

Durch die berühungslose Abtastungmuß weder die Position des Laufwagens noch die Position des Nachfolgeobjekts innerhalb der vorgegebenen Laufstrecke bekannt sein, da es lediglich auf den Abstand zum Nachfolgeobjekt bzw. zu einem Teil des Nachfolgeobjekts ankommt, der durch die parallele Anordnung der beiden Streckenabschnitte vorgebbar ist. Dabei kann das Nachfolgeobjekt vorteilhafterweise gegenüber dem Laufwagen auch beweglich angeordnet sein, so dass der Laufwagen bei Erfassung eines vorgegebenen Abstands zum Nachfolgeobjekt diesem selbsttätig folgt oder auch selbsttätig stillgesetzt wird, wenn sich das Nachfolgeobjekt zumindest zeitweise stationär verhält. Dabei kann bei einem stationären Nachfolgeobjekt vorteilhafterweise auch nur der Laufwagen dem Nachfolgeobjekt bis zu dessen Position nachfolgen und dort zumindest zeitweise stillgesetzt werden.

Die Erfindung hat gegenüber einem Schleppkettenförderer den Vorteil, dass im Grunde nur so viele Laufwagen vorhanden sein müssen, wie gerade Nachfolgeobjekte auf der Fertigungsstrecke oder Bandstraße im parallel verlaufenden Abschnitt vorgesehen sind, da jeder Laufwagen am Ende der Nachfolgestrecke selbsttätig und mit schnellerer Rückfahrgeschwindigkeit wieder an den Startpunkt zurücksteuerbar ist. Dabei können auf den Rückführstreckenabschnitten auch Steigungen und Gefälleabschnitte vorhanden sein, die vorteilhafterweise auch ohne manuelle Eingriffe überwindbar sind.

Durch die einfache berührungslose Abstandsmessung zum Nachfolgeobjekt ist vorteilhafterweise keine zentrale Steuereinheit notwendig, durch die noch Geschwindigkeits- oder Positionsangaben des Nachfolgeobjekts erfasst und verarbeitet werden müssen, so dass die Hängebahn unabhängig von dem jeweiligen Steuerungssystem der Nachfolgeobjekte oder dessen jeweiliger Geschwindigkeit betreibbar ist. Gleichzeitig stellt die Erfindung eine Nachfolgeeinrichtung zur Verfügung, die vorteilhafterweise verschleißfrei und sehr funktionssicher arbeitet und bei einem möglichen Defekt dieser durch einfachen Austausch einzelner Laufwagen oder einzelner Nachführvorrichtungen behoben werden kann.

Berührungslos nachgeführte Laufwagen an Hängebahnen haben den Vorteil, dass sie zur synchronen Nachführung von Montagehilfsmitteln oder Montageteilen sowohl in einer Bandstraßenfertigung als auch zur Nachführung von Lasten in der Grundstoffgüterindustrie einsetzbar sind. Gleichzeitig können durch die Nachführvorrichtung auch selbsttätig weitere Arbeitsvorgänge ausgelöst werden, wie beispielsweise die Ausleerung von Schüttgütern oder die Messung physikalischer Größen am Nachfolgeobjekt.

Die Erfindung wird anhand eines Ausführungsbeispiels, das in der Zeichnung dargestellt ist, näher erläutert. Es zeigen:
- Fig. 1:: eine schematische Darstellung einer Nachführeinrichtung an einem Laufwagen einer Hängebahn oberhalb eines Fertigungsobjekts, und
- Fig. 2:: eine schematische Darstellung einer Hängebahnstrecke mit einer abschnittsweisen parallelen Nachfolgestrecke zu einer Fertigungsbandstrecke.

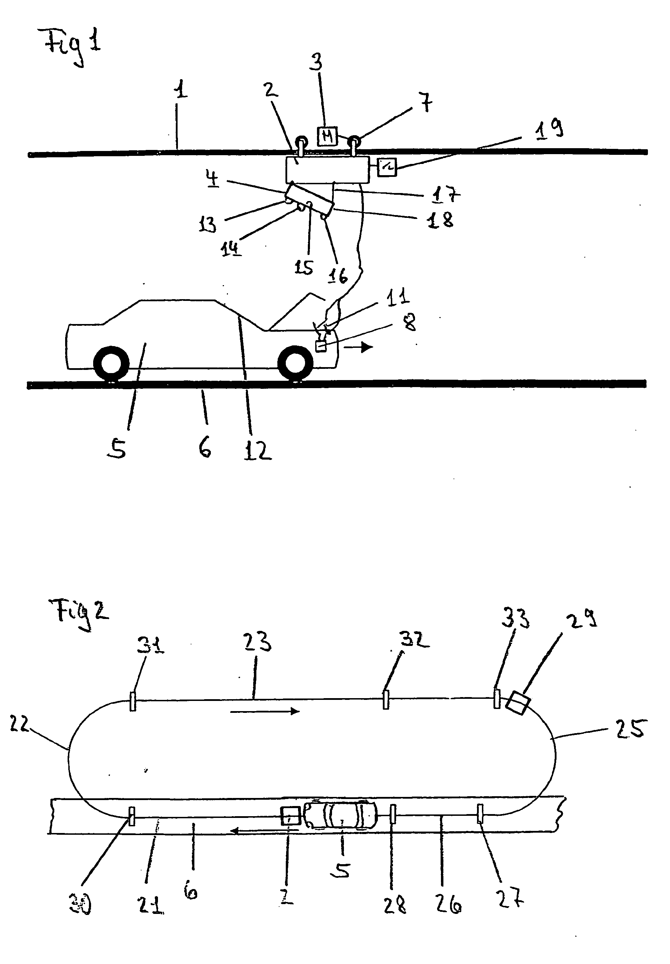

In Fig. 1 der Zeichnung ist ein Ausschnitt einer Hängebahn schematisch mit einem Laufwagen 2 zur Fremdstromversorgung oberhalb eines gefertigten Autos 5 dargestellt, wobei der Laufwagen 2 durch einen gesteuerten Antriebsmotor 3 angetrieben wird und eine optische Abstandsmesseinrichtung 13, 14, 15, 16 zur Nachlaufsteuerung aufweist.

Die Hängebahn besteht im Wesentlichen aus einem endlosen Schienenkreis mit einer Laufschiene 1, an der mehrere Laufwagen 2 hängend angeordnet sind. Die Laufschiene 1 ist oberhalb der Fertigungsstrecke innerhalb einer Fertigungshalle zur Endmontage von Autos 5 waagerecht aufgehängt. Die Laufschiene 1 besteht vorzugsweise aus einem Metallprofil, in das die Laufräder 7 der Laufwagen 2 eingehängt sind. Dabei ist mindestens eines der Laufräder 7 mit einem Elektromotor 3 zum Antrieb des Laufwagens 2 verbunden. Die Hängebahn ist vorzugsweise zur Nachladung einer Autobatterie 8 an montierten Autos 5 vorgesehen, um die während der Montage entnommene Batterieleistung nachzuladen oder batteriegespeiste Montage- oder Prüfvorgänge zu unterstützen. Teilweise wird aber während der Montage nur die Fahrzeugbatterie ersetzt, wenn diese in dem vorgesehenen Montageabschnitt noch nicht eingebaut ist.

Dazu enthält der Laufwagen 2 zur Fertigungsunterstützung eine Fremdstromversorgung 9, die im Wesentlichen die Netzspannung oder eine andere Wechselstromversorgung in eine Batterieladespannung umwandelt. An die Fremdstromversorgung 9 ist ein Ladekabel 10 angeschlossen, das eine oder zwei Ladezangen 11 enthält, die die elektrische Verbindung mit der Batterie 8 oder des Stromversorgungskreises des Autos 5 herstellt.

Die Anordnung der Hängebahn ist im einzelnen aus der schematischen Draufsicht aus Fig. 2 der Zeichnung zu erkennen. Eine derartige Hängebahn zur Batterienachladung enthält einen Laufschienenkreis, der eine Batterienachladung von ca. 20 Minuten bis zu einer Stunde während der Endmontage gewährleisten muss. Dazu werden je nach Montagegeschwindigkeit Schienenlängen von etwa 100 m vorgesehen, auf der ca. 5 bis 10 Laufwagen 2 angeordnet sind. Dabei besteht die Hängebahn aus einem geraden Schienenabschnitt 21 als Lade- und Nachfolgestrecke, der oberhalb eines Fertigungsbandes 6 und zumindest horizontal parallel zu diesem angeordnet ist. Am Ende der Nachfolgestrecke 21 ist ein halbrunder Rückfahrbogen 22 mit anschließender gerader Rückfahrstrecke 23 vorgesehen, die nach einem weiteren Anfahrbogen 25 wieder in die gerade Lade- und Nachfolgestrecke 21 einmündet.

Nach diesem Anfahrbogen 25 ist eine Startposition vorgesehen, die durch einen Startnocken 27 an der Laufschiene 1 gekennzeichnet ist. Dieser Startnocken 27 betätigt einen Impulsschalter am einlaufenden Ladewagen 2 und setzt diesen dadurch an der Startposition still und schaltet eine am Laufwagen 2 angeordnete Nachführeinrichtung 4 ein. Naht nun unter der Startposition ein Auto 5 als Fertigungs- oder Nachfolgeobjekt, dann wird zunächst das Ladekabel 10 angeschlossen.

Die Nachführeinrichtung 4 enthält eine berührungslos arbeitende Abstandsmesseinrichtung, bei der optische Abtastmittel 13, 14, 15, 16 auf eine reflektierende schräge Fläche am Nachfolgeobjekt 5 als Reflektorfläche gerichtet sind. Am Nachfolgeobjekt Auto 5 ist dafür die Frontscheibe 12 als Reflektorfläche vorgesehen, die einen schrägen Anstellwinkel von ca. 20° bis 60° aufweist. Es können aber auch andere schräge oder senkrechte Spiegelflächen oder spezielle Reflektionselemente verwendet werden. Diese Reflektionsfläche 12 dient einer Abstandsmessung, die durch eine optische Abstandsmesseinrichtung 13, 14, 15, 16 ausgeführt wird und die in der Nachführeinrichtung 4 integriert ist.

Dazu ist am Laufwagen 2 ein verstellbarer langgestreckter Messarm 18 angeordnet, dessen Winkel zum Laufwagenunterteil und zum Fertigungsband 6 verstellbar ist. Dabei wird der Messarm 18 über einen Stellmotor und eine Einstellstange 17 in eine vorgegebene Winkelposition verfahren, die vorzugsweise parallel zur reflektierenden Windschutzscheibe 12 ausgerichtet ist. Die bekannte Winkelposition wird aufgrund der zu montierenden Fahrzeugtypen und der dadurch bedingten Scheibenneigung oder durch eine vorher durchzuführende Kalibrierung ermittelt.

Zur Abstandsmessung sind in dem Messarm 18 vorzugsweise drei längsbeabstandete Leuchtdioden 13, 14, 16 als optische Abtastmittel und als Sendeeinrichtung angebracht, wobei diese Leuchtdioden ein für das menschliche Auge nicht sichtbares Infrarotlicht senkrecht auf die Windschutzscheibe 12 abstrahlt. Etwa in der axialen Mitte des Messarms 18 sind Fotodioden 15 als optische Abtastmittel und als Empfangseinrichtung eingelassen, die das an der Windschutzscheibe 12 reflektierte Licht erfasst. Dabei ist die empfangene Lichtintensität proportional zu einem vorgesehenen Abstandspunkt auf der Frontscheibe 12, der einen Referenzpunkt darstellt. Durch einen Kalibrierungsvorgang wird vor dem Bandanlauf mit Hilfe eines repräsentativen Nachfolgeobjekts 5 etwa auf der Hälfte der geneigten Reflektorfläche 12 ein bestimmter Punkt als Referenzabstand eingestellt, durch den die Position des Laufwagens 2 zum Auto 5 als Nachfolgeobjekt vorgegeben wird und dessen Abstand bei der Nachfolge während des Ladevorgangs eingehalten werden soll. In der Praxis haben sich vorzugsweise Abstände zwischen dem Messarm 18 und der Windschutzscheibe 12 von ca. 1 bis 2 m als hinreichend genau erfassbar herausgestellt.

Bewegt sich nun das Auto 5 als Nachfolgeobjekt unter dem stillgesetzten Laufwagen 2 vorwärts, so verändert sich durch die Schräge der Windschutzscheibe 12 die Intensität des empfangenen Lichtes, so dass damit ein veränderter Abstandswert erfasst wird. In der Nachführeinrichtung 4 ist zusätzlich noch eine elektronische Schaltung als Steuereinrichtung vorgesehen, die so ausgebildet ist, dass sie den Elektromotor 3 so lange antreibt, bis der vorgegebene Abstandswert zum Referenzpunkt auf der Windschutzscheibe 12 wieder erreicht wird. Dadurch folgt der Laufwagen 2 dem auf dem Fertigungs- 6 oder Fließband bewegten Auto 5 selbsttätig nach und wird sobald stillgesetzt, sobald das Fließband 6 anhält oder in einer stationären Phase verbleibt. Dabei hat sich die Verwendung von drei versetzt angeordneten Infrarot- Leuchtdioden 13, 14, 16 als vorteilhaft erwiesen, da gerade derartige Wellenlängen im Endmontagebereich kaum vorkommen und so die empfangene Lichtintensität nicht von fremden Lichtquellen beeinflussbar ist.

Derartige Fließ- oder Fertigungsbänder 6 in der Autoindustrie bewegen sich vorzugsweise mit Bandgeschwindigkeiten von 0,2 bis 2 m/min und können durch die Nachführeinrichtung 4 hinreichend schnell erfasst und der Laufwagen 2 durch die Steuereinrichtung nachgeführt werden, wobei auch Nachführgeschwindigkeiten bis zu 10 m/min mit einer derartigen Intensitätsabstandsmessung möglich sind. Es sind aber auch Nachführeinrichtungen 4 an anderen reflektierende Flächenteile wie der Heckscheibe oder abfallend geneigten Karosseriebereichen zur Abstandsmessung verwendbar. Bei einer besonderen Ausbildungsart der Nachführeinrichtung 4 kann der Messarm 18 auch auf die senkrecht angeordneten Seitenspiegel gerichtet werden, die eine besonders hohe Reflektion der Lichtquellen ermöglichen und dadurch die Messgenauigkeit der Abstandsmessungen erhöhen. Es sind aber auch andere berührungslos arbeitende Abstandsmessungen mit Laser, Mikrowellen oder Radarstrahlen in vergleichbarer Genauigkeit ausführbar. Eine derartige Verfolgung von Fertigungsobjekten ist auch in anderen Fertigungs- oder Montageprozessen möglich, wo beispielsweise Fertigungsteile herangeführt oder andere Fertigungshilfen bereitgestellt werden müssen. Eine derartige Nachführeinrichtung 4 ist auch bei der Nachführung oder Heranführung von Lasten an ein stationäres Nachfolgeobjekt 5 einsetzbar, da der Laufwagen 2 selbsttätig bei Erreichen eines vorgegebenen Abstands zu einem anderen Objekt stillsetzbar ist und bei dessen Bewegung diesen zumindest bei paralleler Bewegungsbahn und -richtung folgt. Dabei kann die Nachfolgerichtung ein- oder beidseitig vorgegeben sein, so dass ein Nachfolgeobjekt 5 auch in beide Bewegungsrichtungen nachführbar ist.

Eine derartige Nachführeinrichtung 4 ist auch bei einer Krananlage möglich, die wie eine Hängebahn oder eine Standschienenbahn ausgebildet ist und selbsttätig einem Lade- oder Entladeobjekt folgen soll. Gleichzeitig kann mit einer derartigen Nachführeinrichtung 4 bei Erreichen des vorgegebenen Abstandes zum Nachfolgeobjekt 12 auch ein Lade- oder Entladevorgang ausgelöst werden, wenn dazu besondere Steuerungsorgane vorgesehen sind.

Nach Verlassen der Startposition erreicht der Laufwagen 2 und das Auto 5 als Nachfolgeobjekt nach ca. 2 m eine Freigabeposition, bei der ein zweiter Schaltnocken 28 an der Laufschiene 1 angeordnet ist. In der Laufschiene 1 ist zusätzlich noch eine Ringleitung mit einer Signalspannung von 24 V angeordnet, die mit allen Laufwagen 2, 29 der Hängebahn verbunden ist und die zur Kommunikation der Laufwagen 2, 29 untereinander dient. Dabei werden durch die Schaltnocken 27, 28 unterschiedliche Impulslängen geschaltet, die durch die Auswerteschaltungen in den anderen Laufwagen 2, 29 empfangen und entsprechend ausgewertet werden. So wird durch den ersten Laufwagen 2 an der Freigabeposition eine Impulslänge erzeugt, durch die der nächstfolgende zweite Laufwagen 29, der an einer Stapelposition stillgesetzt ist, eine Signallänge erhält, wodurch dessen Steuervorrichtung den Antriebsmotor 2 in Betrieb setzt, so dass dieser zweite Laufwagen 29 bis an die Startposition vorläuft und dort durch den Startnocken 27 stillgesetzt wird.

Der auf der Ladestrecke 21 als Nachfolgestrecke befindliche erste Laufwagen 2 folgt dem Auto 5 horizontal und linear parallel zum Fließband 6 bis zu einer Rückfahrposition, dort wird er durch den an der Laufschiene 1 angeordneten dritten Schaltnocken 30 stillgesetzt. Sobald die daraufhin abgenommenen Ladezangen 11 in einen Schaltarm eingehängt sind und der Laufwagen 2 manuell freigeschaltet wird, fährt er mit verhältnismäßig niedriger Geschwindigkeit über den Rückfahrbogen 22 bis zur geraden Rückfahrstrecke 23. Am Ende des Rückfahrbogens 22 ist ein vierter Schaltnocken 31 angeordnet, durch den die Steuerschaltung den Antriebsmotor 3 in eine relativ schnelle Rückfahrt bis ca. 20 m/min steuert, und zwar so lange bis ein fünfter Schaltnocken 32 erreicht ist. Nach diesem fünften Schaltnocken 32 wird wiederum in eine langsame Geschwindigkeit umgeschaltet, bis der Laufwagen 2 an einem sechsten Schaltnocken 33 die Stapelposition erreicht und dort stillgesetzt wird. Erreicht der vorhergehende Laufwagen 29 nun wieder die Freigabeposition am zweiten Schaltnocken 28, so wird wiederum die Motorsteuerung eingeschaltet und dieser erste Laufwagen 2 nimmt erneut wieder die Startposition ein und aktiviert gleichzeitig seine Nachführeinrichtung 4. Diese Steuerungsvorgänge werden durch eine programmgesteuerte digitale elektronische Schaltung ausgeführt, die in der Nachführeinrichtung 4 integriert ist.

Die einzelnen Laufwagen 2, 29 sind zusätzlich zumindest in Fahrtrichtung vorn noch mit einem Kollisionsschalter 19 ausgestattet, welcher den Motor 3 stillsetzt, sobald der Laufwagen 2, 29 auf einen vorausfahrenden Laufwagen 2, 29 auffährt. Der Motor 3 ist erst wieder einschaltbar, wenn der Schalter 19 für ca. 2 s nicht betätigt wird. Dabei ist der Motor 3 über eine lösbare Kupplung mit den Antriebslaufrädern 7 gekoppelt. Bei Trennung Motor-Antriebsrad kann der Laufwagen 2 manuell auf der Schiene 1 bewegt werden.

## Patentansprüche

1. Hängebahn zum Transportieren und Positionieren von Fertigungshilfsmitteln (9) mit mindestens einem längs einer Laufschiene (1) verfahrbaren Laufwagen (2), der zumindest abschnittsweise parallel und oberhalb einer Fertigungsbandstrecke oder Nachfolgestrecke (21) verläuft, auf der Autos als Nachfolgeobjekte (5) angeordnet sind, wobei an jedem Laufwagen (2) eine Nachführeinrichtung (4) vorgesehen ist, durch die zumindest auf der abschnittsweise verlaufenden Nachfolgestrecke (21) der Laufwagen (2) einem Nachfolgeobjekt (5) nachführbar ist, wobei jeder Laufwagen (2) einen separaten Elektroantrieb (3) aufweist und die Nachführeinrichtung (4) berührungslose Abtastmittel (13, 14, 15, 16) enthält, durch die die Position zum Nachfolgeobjekt (5) erfasst wird und die eine Steuereinrichtung aufweist, die den Elektroantrieb (3) so steuert, dass der Laufwagen (2) selbsttätig der Bewegung des Nachfolgeobjekts (5) folgt, **dadurch gekennzeichnet, dass** die Nachführeinrichtung (4) oberhalb der Autos (5) am Laufwagen (2) angeordnet ist und dass die berührungslos arbeitenden Abtastmittel (13,14,15,16) der Nachführeinrichtung (4) auf eine darunter vorbeiführbare schräge oder vertikale Reflektorfläche am Auto (5) gerichtet ist, die quer zur Folgerichtung verläuft und dass am Laufwagen (2) oberhalb des Autos (5) als Fertigungshilfsmittel eine Fremdstromversorgung angebracht ist, die ein Ladekabel (10) enthält, das mit einer Autobatterie oder einem Stromkreis des Autos (5) verbindbar ist.

2. Hängebahn nach Anspruch 1, **dadurch gekennzeichnet, dass** die Nachführeinrichtung (4) als Abtastmittel elektromagnetische Strahlen von einer Sendeeinrichtung (13, 14, 16) in Form von breitbandigem Licht, Laser, Mikrowellen oder Radarstrahlen auf eine abstandsabhängige Reflektorfläche (12) am Nachfolgeobjekt (5) aussendet und aus deren Reflektionen mittels einer Empfangseinrichtung (15) ein Signal bildet, das dem Abstand zwischen einem Referenzpunkt auf der Reflektorfläche (12) und der Nachführeinrichtung (4) oder der Empfangseinrichtung (15) entspricht.

3. Hängebahn nach Anspruch 1 oder 2, **dadurch gekennzeichnet, dass** die Steuereinrichtung als programmgesteuerte digitale Rechenschaltung ausgebildet ist, die bei einem vorgegebenen Abstand zum Referenzpunkt den Elektroantrieb (3) stillsetzt und bei einer Abweichung von diesem Abstand den Elektroantrieb (3) so lange ansteuert, bis der vorgegebene Abstand zum Referenzpunkt wieder erreicht ist, wobei bei einem bewegten Nachfolgeobjekt (5) der Antriebsmotor (3) mit der der Bewegung zugrunde liegenden Geschwindigkeit des Nachfolgeobjekts (5) angesteuert wird.

4. Hängebahn nach einem der vorhergehenden Ansprüche, **dadurch gekennzeichnet, dass** die Nachführeinrichtung (4) eine optische Sendeeinrichtung (13, 14, 16) aufweist, die ein breitbandiges Licht auf eine schräggestellte oder vertikale Reflektorfläche (12) am Nachfolgeobjekt (5) abstrahlt und eine optische Empfangseinrichtung (15) enthält, die das reflektierte Licht empfängt und aus deren Intensität den Abstand zum Nachfolgeobjekt (5), zur Reflektorfläche (12) oder einem Punkt auf der Reflektorfläche (12) ableitet.

5. Hängebahn nach einem der vorhergehenden Ansprüche, **dadurch gekennzeichnet, dass** die optische Sende- (13, 14, 16) und Empfangseinrichtung (15) in einem Messarm (18) am Laufwagen (2) integriert ist, dessen Neigung zur Reflektorfläche (12) so einstellbar ist, dass der Messarm (18) parallel oder in einem vorgesehenen Winkel zur Reflektorfläche (12) ausgerichtet ist.

6. Hängebahn nach einem der vorhergehenden Ansprüche, **dadurch gekennzeichnet, dass** der Messarm (18) balkenförmig ausgebildet ist und auf seiner der Reflektorfläche (12) zugewandten Seite drei axial beabstandete Leuchtdioden (13, 14, 16) als Sendeeinrichtung aufweist, die gleiche oder unterschiedliche Lichtfarben aussenden und dazwischen eine Fotodiode (15) zum Empfang des reflektierten Lichts als Empfangseinrichtung angeordnet ist.

7. Hängebahn nach einem der vorhergehenden Ansprüche, **dadurch gekennzeichnet, dass** die Nachführeinrichtung (4) als separate Baueinheit oder als Laufwagenmodul mit dem Laufwagen (2) verbunden ist und in die die optische Sende- (13, 14, 16) und Empfangseinrichtung (15) sowie die Steuereinrichtung integriert ist.

8. Hängebahn nach einem der vorhergehenden Ansprüche, **dadurch gekennzeichnet, dass** die Hängebahn eine Laufschiene (1) enthält, die zu einem endlosen Schienenkreis verbunden ist und mindestens einen Abschnitt (21) als Nachfolgestrecke enthält, die zumindest horizontal parallel zu einer Fertigungsbandstrecke (6) verläuft, auf der die Nachfolgeobjekte (5) angeordnet sind und eine Rückfahrstrecke (23) aufweist, auf der die Laufwagen (2, 29) wieder zu einer Startposition (27) zurückführbar sind.

9. Hängebahn nach einem der vorhergehenden Ansprüche, **dadurch gekennzeichnet, dass** an der Laufschiene (1) Schaltnocken (27, 28, 30, 31, 32, 33) angeordnet sind, durch die die Laufwagen (2, 29) am Ende der Nachfolgestrecke (21) selbsttätig wieder zu dessen Startposition (27) gesteuert werden, wobei die Steuerung so ausgebildet ist, dass für jedes auf der Nachfolgestrecke (21) befindliche Nachfolgeobjekt (5) ein aktivierter Laufwagen (2, 29) zur Nachfolge bereit steht.

## Claims

1. Overhead conveyor for the transfer and positioning of equipment for production (9) with at least one trolley (2) longitudinally movable along a running rail (1), the trolley at least in sections running parallelly and overhead a belt conveyor track for production or a follower track (21) on which vehicles are arranged as follower objects (5), a tracking devices (4) being provided at each trolley (2) by means of which the trolley (2) is able to track a follower object (5) at least on the follower track (21) which runs parallelly in a section, each trolley (2) having a separate electric drive (3) and the tracking device (4) including non-contact scanning means (13, 14, 15, 16) which acquire the position with regard to the follower object (5) and, moreover, including a control system that controls the electric drive (3) in such a way that the trolley (2) automatically tracks the movements of the follower object (5), **characterized in that** the tracking device (4) is arranged above the vehicles (5) at the trolley (2) and that the scanning means (13, 14, 15, 16) operating at no contact of the tracking device (4) are directed to an inclined or vertical reflector area on the vehicle (5) which passes below and which is arranged transversely to the follower direction, and that an external power supply is mounted to be used for production on the trolley (2) above the vehicles (5) that includes a charging cable (10) which can be connected with a vehicle battery or an electric circuit of the vehicle (5).

2. Overhead conveyor as per claim 1, **characterized in that** the tracking device (4) transmits electromagnetic beams from a transmitting device (13, 14, 16) as scanning means in the form of wideband light, laser, microwaves or radar beams to a distance-depending reflector area (12) on the follower object (5) and that it forms a signal by means of a receiving device (15) which corresponds to the distance between a reference point on the reflector area (12) and the tracking device (4) or the receiving device (15).

3. Overhead conveyor as per claim 1 or 2, **characterized in that** the control system is formed as programmable digital computing circuit which stops the electric drive (3) in case of a preset distance to the reference point and controls the electric drive (3) in case of a deviation from this distance until the preset distance to the reference point is again obtained, the drive motor (3) being controlled in case of a movable follower object (5) with the moving speed of the follower object (5).

4. Overhead conveyor as per one of the previous claims, **characterized in that** the tracking device (4) includes an optical transmitting device (13, 14, 16) which transmits a wideband light to an inclined or vertical reflector area (12) on the follower object (5) and includes an optical receiving device which receives the reflected light and determines, on the basis of the light intensity, the distance to the follower object (5), to the reflector area (12) or to a point on the reflector area (12).

5. Overhead conveyor as per one of the previous claims, **characterized in that** the optical transmitting (13, 14, 16) and receiving device (15) is integrated in a measuring arm (18) at the trolley (2), the inclination of which, when compared with the reflector area (12), can be set in such a way that the measuring arm (18) is adjusted in parallel to or in a specified angle towards the reflector area (12).

6. Overhead conveyor as per one of the previous claims, **characterized in that** the measuring arm (18) is designed in a bar-like way and that it includes three light emitting diodes (13, 14, 16) on the side facing the reflector area (12) arranged in axial distance and serving as transmitting device which transmit the same or different light colours while a photo diode (15) is arranged in between as receiving device for the receiving of the reflected light.

7. Overhead conveyor as per one of the previous claims, **characterized in that** the tracking device (4) is connected with the trolley (2) as a separate modular unit or a trolley module and that the optical transmitting (13, 14, 16) and receiving device (15) as well as in the control system are integrated in it.

8. Overhead conveyor as per one of the previous claims, **characterized in that** the overhead conveyor includes a running rail (1) in the form of an endless rail circuit with at least one section (21) designed as follower track which at least horizontally runs in parallel with a belt conveyor track for production (6) on which the follower objects (5) are arranged, and with a return track (23) on which the trolleys (2, 29) return to a start position.

9. Overhead conveyor as per one of the previous claims, **characterized in that** switch cams (27, 28, 30, 31, 32, 33) are arranged at the running rail (1), by means of which the trolleys (2, 29) at the end of the follower track are automatically returned to the track's start position (27), the control designed in such a way that an activated trolley (2, 29) is available for each follower object (5) being on the follower track (21).

## Revendications

1. Convoyeur suspendu destiné au transport et au positionnement de moyens auxiliaires de fabrication (9) avec non moins d'un chariot mobile (2) se déplaçant le long d'un rail de roulement (1), passant, au moins par sections, parallèlement et au-dessus d'un tronçon de la chaîne de fabrication ou du parcours de poursuite (21) sur lequel sont disposés des véhicules, comme objets suiveurs (5), un dispositif de poursuite (4) étant prévu sur chaque chariot mobile (2), permettant au chariot (2) de poursuivre l'objet suiveur (5), au moins par sections du parcours de poursuite (21), où chaque chariot mobile (2) est équipé d'un entraînement électrique (3) séparé, le dispositif de poursuite (4) comprenant des moyens palpeurs sans contact (13, 14, 15, 16) pour permettre la saisie de la position de l'objet suiveur (5), et qui de plus, présente un dispositif de commande qui pilote l'entraînement électrique (3) de telle manière, que le chariot mobile (2) suit automatiquement le mouvement de l'objet suiveur (5), **caractérisé en ce que** le dispositif de poursuite (4) est disposé au-dessus du véhicule (5) sur le chariot mobile et que des moyens palpeurs (13, 14, 15, 16) du dispositif de poursuite (4), fonctionnant sans contact, sont tournés vers une surface réfléchissante oblique ou verticale sur le véhicule (5), passant sous le dispositif de poursuite transversalement au sens de la poursuite et qu'une source d'alimentation externe est installée au-dessus du véhicule (5) sur le chariot mobile (2) comme moyen auxiliaire de fabrication, comprenant un câble de charge (10), pouvant être relié à une batterie d'automobile ou au circuit électrique du véhicule (5).

2. Convoyeur suspendu selon la revendication 1, **caractérisé en ce que** le dispositif de poursuite (4) en sa qualité d'organe palpeur émet des rayons électromagnétiques à partir d'un dispositif émetteur (13, 14, 16) sous forme de rai de lumière à large bande, laser, micro-onde ou faisceau radar vers une surface réfléchissante (12) en fonction de la distance vers l'objet suiveur (5) et dont les réflexions créent, au moyen d'un dispositif récepteur (15), un signal correspondant à la distance entre un point de référence sur la surface réfléchissante (12) et le dispositif récepteur (15).

3. Convoyeur suspendu selon la revendication 1 ou 2, **caractérisé en ce que** le dispositif de commande est conçu comme un circuit intégré de calcul numérique commandé par programme, qui arrête l'entraînement électrique (3) à une distance déterminée avec le point de référence et, au cas où cette distance n'est pas correcte, opère l'entraînement électrique (3) jusqu'à ce que la distance prédéterminée avec le point de référence soit de nouveau obtenue, où quand l'objet suiveur (5) est en mouvement, le moteur d'entraînement (3) est commandé à la vitesse de base de l'objet suiveur.

4. Convoyeur suspendu selon l'une des revendications précédentes, **caractérisé en ce que** le dispositif de poursuite (4) présente un dispositif émetteur optique (13, 14, 16), qui émet une lumière à large bande sur une surface réfléchissante (12) oblique ou verticale de l'objet suiveur (5), et un dispositif récepteur (15) qui reçoit la lumière réfléchie et, à partir de son intensité, détermine la distance avec l'objet suiveur (5), avec la surface réfléchissante (12) ou avec un point sur la surface réfléchissante (12).

5. Convoyeur suspendu selon l'une des revendications précédentes, **caractérisé en ce que** le dispositif optique émetteur (13, 14, 16) et récepteur (15) est intégré dans un bras de mesure (18) sur le chariot mobile (2), dont l'inclinaison vers la surface réfléchissante (12) est réglable de manière, à ce que le bras de mesure (18) soit ajusté parallèlement ou sous un angle prédéterminé par rapport à la surface réfléchissante (12).

6. Convoyeur suspendu selon l'une des revendications précédentes, **caractérisé en ce que** le bras de mesure (18) est conçu en forme de barre, et sur son côté tourné vers la surface réfléchissante (12) se présentent trois diodes luminescentes à distance axiale (13, 14, 16) servant de dispositif émetteur, émettant une lumière de même couleur ou de couleurs différentes, une photodiode (15) étant installée entre elles comme dispositif récepteur de la lumière réfléchie.

7. Convoyeur suspendu selon l'une des revendications précédentes, **caractérisé en ce que** le dispositif de poursuite (4) est connecté au chariot mobile (2) et réalisé comme une unité modulaire ou comme un module du chariot mobile et intégré dans le dispositif émetteur (13, 14, 16) et récepteur (14) ainsi que dans le dispositif de commande.

8. Convoyeur suspendu selon l'une des revendications précédentes, **caractérisé en ce que** le convoyeur suspendu comprend un rail de roulement (1) relié avec une boucle de roulement sans fin et comprend au moins une section comme parcours de poursuite (21), qui au moins horizontalement se déroule parallèlement à une section de la chaîne de production (6) sur laquelle sont disposés les objets suiveurs (5) et présente une section de retour (23), sur laquelle les chariots mobiles (2, 29) retournent de nouveau à leur position de départ (27).

9. Convoyeur suspendu selon l'une des revendications précédentes, **caractérisé en ce que**, des cames de contacteur (27, 28, 30, 31, 32 33) sont disposées sur le rail de roulement (1) grâce auxquelles les chariots de roulement (2, 29) sont commandés automatiquement à leurs position de départ (27) à la fin du parcours de poursuite, la commande étant conçue de telle manière, que pour chaque objet suiveur (5) se trouvant sur le parcours de poursuite (21), un chariot activé (2, 29) se trouve prêt à la poursuite.
